# FASCICULE DE BREVET EUROPEEN

(11) **EP 2 289 717 B1**
(45) Date de publication et mention de la délivrance du brevet: **19.09.2012**
(21) Numéro de dépôt: 10173124.8
(22) Date de dépôt: 17.08.2010
(51) Int. Cl.: B60D 1/00, B60T 7/00

(54) **Remorque à timon coulissant équipée d'un dispositif de sécurité contre la surcharge du timon coulissant**
Anhänger mit schiebbarer Deichsel ausgestattet mit einer Schutzvorrichtung gegen die Überbelastung der schiebbaren Deichsel
Trailer with slidable tow bar equipped with a security system for protection against overcharging of the slidable tow bar

(30) Priorité: 27.08.2009 FR 0955857
(43) Date de publication de la demande: 02.03.2011
(73) Titulaire: LG Développement, 56150 Baud (FR)
(72) Inventeur: Le Goff, Jean-Philippe, 56150 Baud (FR)
(74) Mandataire: Hays, Bertrand

(56) Documents cités:
- EP-A- 0 001 299
- FR-A- 2 655 002

## Description

La présente invention concerne une remorque à timon coulissant, et plus particulièrement une remorque à timon coulissant équipée d'un dispositif de sécurité contre la surcharge du timon coulissant, ainsi qu'un ensemble routier comprenant une telle remorque et un véhicule tracteur.

EP 0 001 299 A1 décrit une remorque conformément aux préambules des revendications 1 et 8.

Les remorques routières dont le poids total autorisé en charge est compris entre 750 kg et 3500 kg doivent être équipées d'un système autonome de freinage. Pour des raisons de coût avantageux, le système généralement utilisé est celui du freinage par inertie. Il est constitué d'un timon dit télescopique ou coulissant dont la partie mobile qui s'accroche au véhicule coulisse dans une partie fixe liée à la remorque. Lorsque le véhicule tracteur freine, l'effet d'inertie de la remorque contraint la partie mobile à rentrer dans la partie fixe. Par l'intermédiaire d'un levier, la partie mobile du timon tire alors sur des câbles reliés directement aux segments de freins disposés dans les tambours des roues. La force de freinage de la remorque est ainsi maintenue en équilibre permanent avec la force de freinage du véhicule tracteur pendant les phases de ralentissement.

Lorsqu'une remorque routière est chargée réglementairement, le centre de gravité de la charge doit être situé légèrement en avant de l'essieu porteur, ou des essieux porteurs, de telle sorte que, à l'arrêt, le report de charge vertical à l'extrémité avant du timon coulissant ne dépasse pas une charge statique maximale admissible généralement comprise entre 50 kg et 150 kg.

Cette charge maximale à ne pas dépasser, garantit le bon coulissement de la partie mobile du timon dans la partie fixe. Si cette charge maximale dépasse de façon importante celle préconisée par le constructeur et/ou la réglementation, cela entraîne une déformation des pièces qui composent le timon avec pour effet de limiter ou de bloquer le libre coulissement de la partie mobile dans la partie fixe. Lors des phases de freinage, la partie mobile du timon ne rentre plus normalement dans le la partie fixe, la tension des câbles de frein est soit réduite soit rendue impossible. Le système de freinage n'agit plus que partiellement ou est rendu totalement inopérant. La survenance d'une telle situation est préjudiciable à la sécurité routière.

Lorsque la charge transportée est disposée sur la remorque conformément aux préconisations du constructeur et/ou à la réglementation, pour respecter le report de charge statique, le report de charge dynamique sur le timon pendant les déplacements sur route peut être supérieur. Ceci est le cas pendant les phases de freinage. Le dispositif de freinage, lié au châssis de la remorque, agit en ralentissant la vitesse de rotation des roues. Cet effort de freinage des roues crée alors un couple de basculement de la remorque vers l'avant.

La force agissante est la force d'inertie de la remorque en mouvement dont la résultante agit en son centre d'inertie. Celui-ci étant situé à une certaine hauteur au-dessus de la surface de la route, un couple de basculement vers l'avant apparaît. L'axe de rotation instantané de la remorque passe par les points de contact des roues de l'essieu de la remorque avec la route.

Ce couple a pour effet de créer un report de charge supplémentaire sur le timon pendant les phases de freinage. Les timons commercialisés sont calculés avec un coefficient de sécurité qui leur permet d'assurer normalement le freinage pendant cette phase de surcharge dynamique mais à la condition que la charge statique maximale admissible de départ soit respectée.

L'excès de report de charge sur le timon avant est une situation malheureusement assez fréquente en usage courant. Les remorques routières sont toutes sujettes à la tendance au louvoiement, particulièrement celles qui ne possèdent qu'un seul essieu porteur. Lorsque le centre de gravité de la charge transportée est situé en arrière de l'essieu arrière, on dit que la charge est mal équilibrée. Sur la route, un phénomène de louvoiement de la remorque ne manquera pas d'apparaître à une certaine vitesse. Si le véhicule tracteur poursuit son accélération, le phénomène de louvoiement peut devenir extrêmement puissant et provoquer la perte de contrôle de l'ensemble routier. Ceci est une cause d'accidents de la route.

Pour éviter cette situation dangereuse, la majorité des utilisateurs de remorques routières disposent leurs charges volontairement sur la partie avant de la remorque ce qui a un puissant effet stabilisateur sur route. En agissant ainsi, ils surchargent involontairement le timon de leur remorque ce qui réduit dangereusement sa capacité de coulissement nécessaire au freinage.

Outre le risque de mise hors service du dispositif de freinage, il arrive que de telles surcharges provoquent des ruptures de timon.

Le but de la présente invention est de proposer une solution visant à pallier aux inconvénients précités.

A cet effet, la présente invention propose une remorque comprenant un châssis sur lequel sont montés, au moins deux roues, un dispositif de suspension portant lesdites roues, et au moins un timon coulissant à freinage par inertie comportant une partie fixe montée de manière fixe sur le châssis et une partie mobile montée sur la partie fixe de manière coulissante, et munie à son extrémité libre de moyens d'accrochage destinés à coopérer avec des moyens d'accrochage complémentaires d'un véhicule tracteur pour l'accrochage de la remorque audit véhicule tracteur, **caractérisée en ce qu**'elle comprend au moins un organe de soutènement monté, via un support fixé directement ou indirectement au châssis, en avant de ladite partie fixe, au-dessus de ladite partie mobile, sensiblement en contact avec celle-ci, et contre lequel la partie mobile est apte à venir en appui pendant son coulissement.

Selon l'invention, pour éviter la déformation du timon coulissant par surcharge, la remorque est équipée d'un dispositif de sécurité contre la surcharge du timon coulissant, ce dispositif de sécurité comprenant un organe de soutènement disposé au-dessus de sa partie mobile, en arrière de moyens d'accrochage constitués généralement d'un anneau ou d'une coiffe pour boule d'attelage. La surface de contact de cet organe de soutènement, dite surface active est positionnée en affleurement de la surface supérieure de la partie mobile du timon. En situation normale, lorsque la remorque est à charge maximale répartie conformément aux prescriptions du constructeur et/ou de la réglementation, ce dispositif de sécurité n'agit pas. Par contre, dès qu'il y a surcharge du timon, la partie mobile du timon fléchit légèrement et vient s'appuyer contre l'organe de soutènement. Ce dernier supporte alors la totalité de l'excès de report de charge. Le timon coulissant continue alors à fonctionner normalement malgré l'excès de charge, et lorsque la remorque est équipée d'un dispositif de freinage par inertie commandé par le timon coulissant, le freinage normal de la remorque est ainsi parfaitement assuré pendant les phases d'utilisation anormales.

Le support, fixé directement au châssis de la remorque, ou à la partie fixe du timon coulissant fixée au châssis, ou éventuellement au faux-châssis de la carrosserie fixé au châssis de la remorque, a pour fonction de maintenir solidement en position l'organe de soutènement au dessus de la partie mobile.

Selon une particularité, ledit organe de soutènement est apte à maintenir latéralement la partie mobile du timon coulissant par rapport à la partie fixe solidaire du châssis de la remorque.

Selon un mode de réalisation, ledit organe de soutènement est formé d'au moins d'un galet de soutènement, monté en rotation sur le support selon un axe de rotation perpendiculaire au plan longitudinal vertical de la remorque. La remorque peut comprendre plusieurs galets de soutènement décalés les uns des autres, soit transversalement, soit longitudinalement, et montés éventuellement sur un même support fixé directement ou indirectement au châssis.

La surface active de contact du galet de soutènement est sensiblement en contact avec la surface active de contact supérieure de la partie mobile du timon. Si celle-ci est plate, le galet a une forme cylindrique. Selon un mode de réalisation, la surface active de contact du galet de soutènement est sensiblement en contact avec une surface active de contact sensiblement cylindrique de la partie mobile, ledit galet de soutènement ayant une surface active de contact concave, dont la concavité correspond sensiblement au rayon de courbure de la surface de contact cylindrique de la partie mobile.

Selon un mode de réalisation, ladite remorque comprend en outre au moins deux galets latéraux montés rotatifs sur ledit support autour d'axes de rotation sensiblement parallèles au plan longitudinal vertical de la remorque, lesdits galets latéraux étant disposés de part et d'autre de la partie mobile du timon coulissant, sensiblement en contact avec cette dernière.

Selon un mode de réalisation, ledit support comprend une traverse support montée aux extrémités avant de longerons qui s'étendent de part et d'autre du timon coulissant.

Avantageusement, ledit support est monté réglable en hauteur par rapport au châssis de façon à régler avec précision l'affleurement de la surface active du galet avec la surface supérieure active de la partie mobile du timon.

Selon un mode de réalisation, la remorque est équipée d'un dispositif de freinage par inertie, comprenant des moyens de freinage disposés au niveau des roues et commandés par le déplacement de la partie mobile via un système de transmission, par exemple de type tringlerie ou de type hydraulique.

Le dispositif de sécurité selon l'invention est en particulier adapté pour des remorques à guidage axial, tel que décrit dans la demande de brevet européen, déposée le 9 juillet 2009, sous le n°09165107.5 et ayant pour titre «Ensemble routier » , dans lesquelles la remorque est accrochée au véhicule tracteur, en amont de l'essieu arrière de ce dernier, et dans laquelle le timon est placé sous l'avant de la zone de chargement et peut être, de ce fait beaucoup plus sollicité que sur une remorque classique à timon long. Selon un mode de réalisation, la remorque présente donc une zone de chargement qui s'étend au-dessus du timon coulissant. La zone de chargement s'étend uniquement au-dessus de la partie fixe ou au moins au dessus de la partie fixe. Dans ce dernier cas, la zone de chargement peut s'étendre éventuellement au-dessus de l'ensemble du timon coulissant.

La présente invention a également pour objet un ensemble routier **caractérisé en ce qu**'il comprend
- une remorque telle que définie précédemment,
- un véhicule tracteur comprenant un châssis sur lequel sont montés au moins un essieu avant et un essieu arrière, et des moyens d'accrochage montés sur le châssis, en avant de l'essieu arrière, aptes à coopérer avec les moyens d'accrochage de la remorque pour accrocher la remorque au véhicule tracteur dans une position dite accrochée de la remorque, de sorte que la remorque soit articulée sur le véhicule tracteur au moins autour d'un axe transversal de tangage sensiblement horizontal en avant de l'essieu arrière du véhicule tracteur, et,
- un dispositif dit de guidage axial comprenant des moyens de guidage sur le véhicule tracteur aptes à coopérer dans la position accrochée de la remorque, avec des moyens de guidage complémentaires sur la remorque pour maintenir l'axe longitudinal médian de la remorque sensiblement dans le plan longitudinal vertical du véhicule tracteur lors de la conduite sur route, ledit axe longitudinal médian de la remorque passant sensiblement par ledit axe transversal de tangage, et pour ainsi guider le pivotement de la remorque autour dudit axe transversal.

Dans la position accrochée de la remorque, lesdits moyens de guidage du véhicule tracteur sont aptes à coopérer, sensiblement entre l'essieu arrière du véhicule tracteur et l'essieu avant de la remorque, derrière l'essieu avant de la remorque, et/ou devant l'essieu arrière du véhicule tracteur, de préférence sensiblement entre lesdits essieux, avec lesdits moyens de guidage de la remorque pour maintenir l'axe longitudinal médian de la remorque et le plan longitudinal vertical du véhicule tracteur sensiblement confondus et guider le pivotement de la remorque autour dudit axe transversal.

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence aux dessins schématiques annexés, sur lesquels :
- la figure 1 est une vue en perspective d'une remorque selon l'invention ;
- la figure 2 est une vue de côté de la remorque avec arraché partiel au niveau du timon coulissant ;
- la figure 3 est une vue en perspective du timon coulissant de la figure 1 et de son organe de soutènement associé formé d'un galet de soutènement ;
- la figure 4 est une vue en coupe longitudinale d'un timon coulissant analogue à la figure 4, en l'absence d'un galet de soutènement illustrant les efforts appliqués sur le timon en utilisation ;
- la figure 5 est une vue analogue à celle de la figure 4 du timon coulissant et du galet de soutènement associé selon l'invention ;
- la figure 6 est une vue en perspective d'une remorque selon un autre mode de réalisation, telle qu'une remorque à guidage axial; et,
- la figure 7 est une vue analogue à la figure 3 illustrant un organe de soutènement selon une variante de réalisation, combiné à deux galets latéraux.

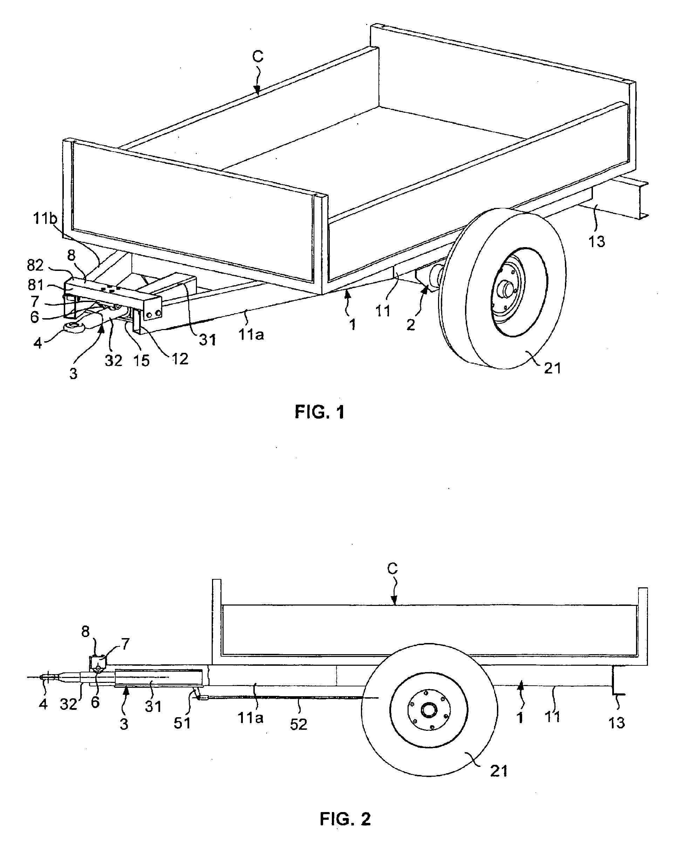

En référence aux figures 1 et 2, la remorque selon l'invention comprend un châssis 1 comportant deux longerons 11 reliés entre eux par des traverses. Le châssis est équipé d'un essieu 2 unique portant deux roues 21. Le châssis peut être équipé de différents types de carrosserie, par exemple d'une benne C, basculante ou non basculante, tel qu'illustré sur la figure 1.

La remorque comprend un timon d'attelage de type coulissant, dit timon coulissant 3, disposé selon le plan longitudinal de symétrie de la remorque. Le timon coulissant comprend une première partie fixe qui est solidaire du châssis de la remorque, à l'avant de celui-ci, et une partie mobile destiné à être accrochée à un véhicule tracteur pour l'utilisation de la remorque.

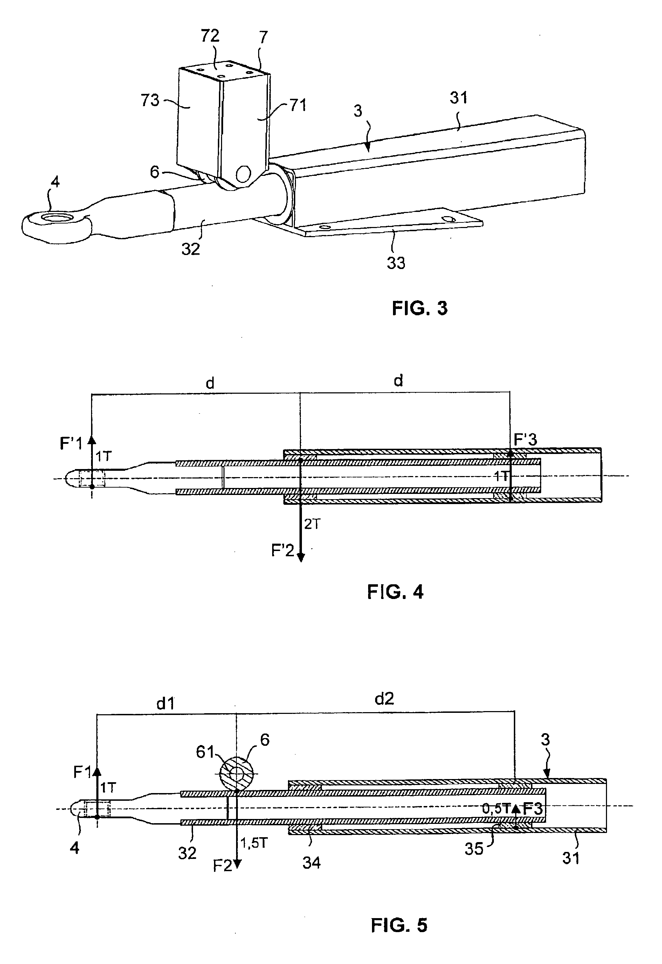

En référence aux figures 3 et 4, la partie fixe est formée d'un corps fixe tubulaire 31 qui est fixé par sa base au châssis. La partie mobile est formée d'une barre tubulaire mobile 32 qui est montée coulissante par une première extrémité dans le passage interne du corps fixe. Sa deuxième extrémité, dite extrémité libre, est équipée de moyens d'accrochage pour l'accrochage de la remorque à un véhicule tracteur, tel qu'un anneau d'accrochage 4.

De manière connue, la barre mobile est munie de moyens de retenue coopérant avec des moyens de retenue complémentaires du corps fixe tubulaire pour retenir la barre mobile dans le corps fixe, ces moyens de retenue (non représentés) définissent une position déployée maximale de la barre mobile, dans laquelle la barre mobile est avantageusement sollicitée élastiquement par des moyens de rappel élastique appropriés.

La remorque est équipée d'un dispositif de freinage par inertie commandé par l'inertie de la remorque, à savoir par le rapprochement de la remorque et du véhicule tracteur lors du freinage. Le déplacement de la barre mobile commande, via un système de transmission, ici de type tringlerie, l'activation de moyens de freinage disposés au niveau des roues. A titre d'exemple, selon la figure 2, le système de transmission comprend un levier 51 monté pivotant sur le corps fixe tubulaire. En s'enfonçant dans ce dernier, la barre mobile 32 actionne un premier bras du levier. Le deuxième bras du levier est connecté par une tringle 52 à des câbles reliés aux segments de freins disposés dans les tambours des roues 21. Lors du freinage du véhicule tracteur, la barre mobile 32 qui s'enfonce dans le corps tubulaire fixe 31 du timon 3, pousse le levier 51 qui, en basculant, tire sur la tringle 52, et les câbles reliés aux segments de freins.

Selon l'invention, la remorque est équipée en outre d'un dispositif de sécurité contre la surcharge du timon coulissant. Dans le mode de réalisation illustré aux figures 1 à 3, ce dispositif comprend un galet de soutènement 6 monté rotatif autour d'un axe transversal entre les deux branches 71 d'une chape 7 ou étrier.

Les longerons 11 du châssis se prolongent par des parties avant 11a, 11b dont les extrémités 12 sont disposées de part et d'autre de la partie mobile du timon. Ces extrémités 12 sont reliées par une traverse support 8 disposée au dessus de la barre mobile 32. La chape 7 portant le galet est montée sur cette traverse support 8 par sa base 72 de sorte que le galet de soutènement 6 soit disposé au-dessus de la barre mobile, sensiblement en contact avec cette dernière.

A titre d'exemple, la traverse support présente une section transversale en U, et les branches 71 de la chape sont rigidifiées par des parois latérales 73. La chape est montée entre les deux ailes 81 de la traverse support, la base 72 de la chape est fixée contre la base 82 de la traverse support, via des boulons, et ses parois latérales 73 viennent contre les ailes 81 de la traverse support. Avantageusement, le galet de soutènement est réglable en hauteur par rapport à la barre mobile, le réglage s'effectuant soit par la chape 7 par rapport à la traverse 8, soit par la traverse 8 par rapport au châssis 1, un système de cale ou de vis permettant de régler avec précision l'affleurement de la surface active du galet avec la surface active de la partie supérieure mobile du timon.

Le galet présente une surface de contact adaptée à la surface de contact de la barre mobile, de sorte que le galet et la barre mobile soient en contact selon une ligne de contact transversale. La barre mobile est par exemple de section carrée, le galet étant alors de forme cylindrique ou de section ronde, le galet présentant alors une gorge périphérique de forme torique qui définit une surface active de contact concave, dont la concavité correspond au rayon de courbure de la barre mobile.

La barre mobile cylindrique est par exemple montée coulissante dans le corps fixe tubulaire de section ronde ou rectangulaire au moyen de deux bagues ou paliers, dits palier avant 34 et palier arrière 35, disposés respectivement à l'extrémité avant et dans la partie arrière du corps tubulaire.

Tel qu'expliqué précédemment, en cas de surcharge du timon, la barre mobile fléchit légèrement et vient s'appuyer contre le galet de soutènement. Ce dernier supporte alors la totalité de l'excès de report de charge garantissant ainsi un fonctionnement normal du timon coulissant et du dispositif de freinage.

Dans le cas d'une remorque routière lourdement chargée, accrochée à un véhicule tracteur à l'arrêt, le poids de cette remorque se répartit principalement sur ses roues mais aussi sur son anneau d'accrochage. L'anneau d'accrochage exerce une force verticale de haut en bas sur la chape d'attelage du véhicule qui exerce une contre réaction ou effort sur l'anneau, de force égale et opposée. L'anneau étant toujours disposé en porte-à-faux avant par rapport à la partie utile de la remorque qui reçoit la charge, il s'exerce de ce fait un important effet de levier sur la barre tubulaire fixe du timon. L'anneau est le point où s'exerce l'effort dirigé de bas en haut et la barre mobile fait office de levier. Puisque le système est en équilibre, le corps fixe tubulaire exerce des contre-réactions à travers ses paliers. Le calcul des forces en jeu s'exécute de la façon suivante :
- la somme des forces s'exerçant dans le plan vertical doit être nulle ; et,
- la somme des couples (force x distance au point considéré comme pivot) doit être nulle.

A titre d'exemple, en absence de roue de soutènement selon l'invention, tel qu'illustré à la figure 4, lorsque l'effort F'1 sur l'anneau est égal à une tonne, et que la distance d entre l'anneau et le premier palier est égale à celle séparant les deux paliers avant et arrière, alors la contre réaction ou effort F'2 sur le corps fixe à travers le palier avant sera égale à 2 tonnes et la contre réaction ou effort F'3 sur le corps fixe à travers le palier arrière sera égal à 1 tonne.

Lorsque le timon est équipé d'un galet de soutènement selon l'invention, tel qu'illustré à la figure 4, la répartition des efforts est différente. En considérant un effort F1 exercé par la chape du véhicule sur l'anneau du timon également de 1 tonne, alors l'effort F2 supporté par le galet 6 est plus faible que celui supporté antérieurement par le palier avant du timon. Il est égal à 1,5 tonne au lieu de 2 tonnes du fait de la réduction de la longueur du bras de levier d1 qui est inférieur à d. Le galet est facilement dimensionné pour supporter cet effort. L'effort supporté par le palier avant 34 du timon est désormais nul ou très faible selon le réglage du jeu entre galet et barre mobile. L'effort F3 subit par le palier arrière du timon a été divisé par deux. Il n'est plus que de 500 kg au lieu d'une tonne dans le cas précédent du fait de l'existence d'une distance d2 entre le palier et le galet qui est, dans le cas représenté, le double de la distance d1 entre l'anneau et le galet.

La position du galet, en avant du palier avant du timon, permet :
- de devenir le nouveau point pivot en remplacement du palier avant ;
- de préserver le palier avant de toute surcharge, voire de tout effort selon le réglage, ce qui limite son usure ;
- de réduire le porte à faux de l'anneau d'accrochage et donc de diminuer l'effet de levier qu'il exerce sur le corps tubulaire fixe par l'intermédiaire de la barre mobile;
- d'augmenter corrélativement la distance entre le point pivot et le palier arrière ce qui réduit proportionnellement l'effort subit par ce dernier ;
- de garantir un bon freinage en toute circonstance grâce à la diminution sensible des efforts de frottement et à la suppression des déformations de la barre mobile et du corps fixe tubulaire du timon, même si elles sont réversibles ; et,
- d'éloigner tout risque de rupture de timon pour les cas de surcharges très importantes.

La surface de contact concave du galet de soutènement permet en outre de maintenir latéralement l'axe du timon, ce qui limite les efforts subis par le palier avant et donc son usure.

Pour rigidifier le corps fixe tubulaire, celui-ci est fixé aux deux parties avant 11a et 11b des longerons. Une barre ou plaque inférieure 15 est avantageusement montée entre les deux parties avant, et le corps fixe est muni de deux pattes latérales 33 pour sa fixation sur cette barre ou plaque inférieure.

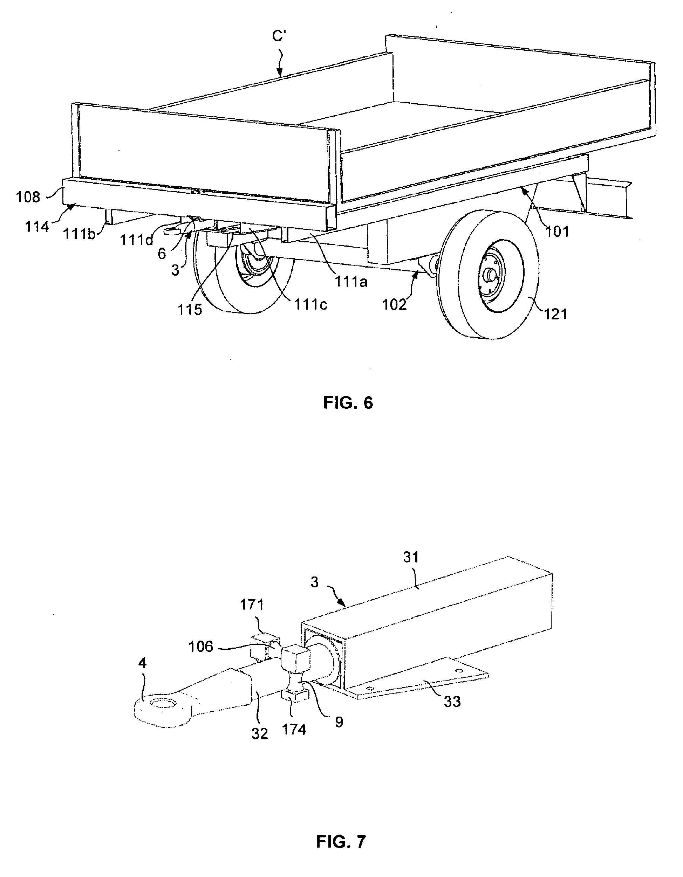

La figure 6 illustre une remorque selon un autre mode de réalisation, du type à guidage axial, tel que décrit dans la demande de brevet européen précitée, destinée à être accrochée à un véhicule tracteur en amont de l'essieu arrière du véhicule tracteur et dont le timon coulissant est disposé en-dessous de la zone de chargement de la remorque ou à proximité immédiate.

La remorque comprend comme précédemment un châssis 101 comprenant des longerons 111a, 111b et 111c, 111d reliés par des traverses, dont notamment une traverse avant 114 reliant les extrémités avant des longerons. Le châssis comprend en particulier une paires de longerons extérieurs 111a et 111b et une paire de longerons intérieurs 111c et 111d Le timon coulissant 3, tel qu'illustré à la figure 3, est monté par son corps fixe tubulaire sur le châssis, en particulier sur une plaque inférieure 115 montée entre les deux parties d'extrémité avant des longerons intérieurs 111c et 111d. La barre mobile est disposée sous la traverse avant, de sorte que son anneau d'accrochage 4 reste en avant de ladite traverse avant 114 dans la position enfoncée de la barre mobile. La zone de chargement de la remorque, définie dans ce mode de réalisation par une carrosserie de type benne C' montée sur le châssis, s'étend au-dessus du corps fixe du timon coulissant, la face avant de la carrosserie étant disposée sensiblement contre la traverse avant. La traverse avant constitue une traverse support 108 pour la fixation d'un galet de soutènement 6 monté sur sa chape, tel qu'illustré à la figure 3.

La figure 7 illustre le timon coulissant de la figure 3 et un organe de soutènement selon une variante de réalisation. L'organe de soutènement comprend comme précédemment un galet de soutènement 106 avec un axe de rotation transversal. Pour améliorer le maintien de la barre mobile du timon dans le plan longitudinal vertical de la remorque, le galet de soutènement est associé à deux galets 9, dits latéraux, à axes de rotation verticaux, disposés parallèlement de part et d'autre du plan de symétrie vertical médian de la remorque. Lesdits galets latéraux viennent latéralement de part et d'autre de la barre mobile, en étant sensiblement en contact avec cette dernière. Comme précédemment, le galet de soutènement et les deux galets latéraux ont des surfaces périphériques actives concaves, dont la concavité correspond au rayon de courbure de la barre mobile. Le galet de soutènement est monté en rotation entre deux pièces support 171, dites supérieures, chaque galet latéral étant monté en rotation entre une pièce support supérieure 171 et une pièce support inférieure 174. La pièce support supérieure et les pièces support inférieures sont montées de manière fixe à un même support (non représenté) solidaire du châssis, par exemple une traverse support 8, 108 telles que décrites précédemment, ou éventuellement à un support monté sur le corps tubulaire fixe du timon coulissant.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Remorque comprenant un châssis (1, 101) sur lequel sont montés au moins deux roues (21, 121) et au moins un timon coulissant (3) comportant une partie fixe (31) monté de manière fixe sur le châssis et une partie mobile (32) montée sur la partie fixe de manière coulissante, et munie à son extrémité libre de moyens d'accrochage (4) pour l'accrochage de la remorque à un véhicule tracteur, **caractérisée en ce qu'**elle comprend au moins un organe de soutènement (6, 106) monté, via un support (7, 8 , 108 ; 171, 174) fixé au châssis (1, 101), en avant de ladite partie fixe (31), au-dessus de ladite partie mobile (32), sensiblement en contact avec celle-ci, et contre lequel la partie mobile est apte à venir en appui.

2. Remorque selon la revendication 1, **caractérisée en ce que** ledit organe de soutènement est apte à maintenir latéralement la partie mobile du timon coulissant par rapport à la partie fixe solidaire du châssis de la remorque.

3. Remorque selon la revendication 1 ou 2, **caractérisée en ce que** ledit organe de soutènement est formé d'au moins un galet de soutènement (6, 106), monté en rotation sur le support (7, 8) selon un axe de rotation (61) perpendiculaire au plan longitudinal vertical de la remorque.

4. Remorque selon les revendications 2 et 3, **caractérisée en ce que** ledit galet de soutènement (6, 106) est sensiblement en contact avec une surface de contact sensiblement cylindrique de la partie mobile (32), ledit galet de soutènement ayant une surface active de contact concave, dont la concavité correspond sensiblement au rayon de courbure de la surface de contact cylindrique de la partie mobile.

5. Remorque selon l'une des revendications 2 à 4, **caractérisée en ce qu'**elle comprend en outre au moins deux galets latéraux (9) montés rotatifs sur ledit support autour d'axes de rotation sensiblement parallèles au plan longitudinal vertical de la remorque, lesdits galets latéraux étant disposés de part et d'autre de la partie mobile du timon coulissant, sensiblement en contact avec ladite partie mobile.

6. Remorque selon l'une des revendications 1 à 5, **caractérisée en ce que** ledit support comprend une traverse support (8, 108) montée aux extrémités avant de longerons (11 ; 111a, 111b, 111c, 111d) du châssis qui s'étendent de part et d'autre du timon coulissant.

7. Remorque selon l'une des revendications 1 à 6, **caractérisée en ce qu'**elle présente une zone de chargement qui s'étend au-dessus du timon coulissant.

8. Ensemble routier **caractérisé en ce qu'**il comprend
- une remorque telle que définie dans l'une des revendications 1 à 7,
- un véhicule tracteur comprenant un châssis sur lequel sont montés au moins un essieu avant et un essieu arrière, et des moyens d'accrochage montés sur le châssis, en avant de l'essieu arrière, aptes à coopérer avec les moyens d'accrochage de la remorque pour accrocher la remorque au véhicule tracteur dans une position dite accrochée de la remorque, de sorte que la remorque soit articulée sur le véhicule tracteur au moins autour d'un axe transversal de tangage sensiblement horizontal en avant de l'essieu arrière du véhicule tracteur, et,
- un dispositif dit de guidage axial comprenant des moyens de guidage sur le véhicule tracteur aptes à coopérer dans la position accrochée de la remorque, avec des moyens de guidage complémentaires sur la remorque pour maintenir l'axe longitudinal médian de la remorque sensiblement dans le plan longitudinal vertical du véhicule tracteur.

## Claims

1. Trailer comprising a chassis (1, 101) on which are mounted at least two wheels (21, 121) and at least one sliding tow bar (3) comprising a fixed portion (31) mounted in a fixed manner on the chassis and a moveable portion (32) mounted on the fixed portion in a sliding manner, and furnished at its free end with coupling means (4) for the coupling of the trailer to a pulling vehicle, **characterized in that** it comprises at least one supporting member (6, 106) mounted, by means of a support (7, 8, 108; 171, 174) fixed to the chassis (1, 101), in front of the said fixed portion (31), above the said moveable portion (32), substantially in contact wit the latter, and against which the moveable portion is capable of resting.

2. Trailer according to Claim 1, **characterized in that** the said supporting member is capable of laterally holding the moveable portion of the sliding tow bar relative to the fixed portion secured to the chassis of the trailer.

3. Trailer according to Claim 1 or 2, **characterized in that** the said supporting member is formed of at least one supporting roller (6, 106), rotatably mounted on the support (7, 8) on an axis of rotation (61) perpendicular to the vertical longitudinal plane of the trailer.

4. Trailer according to Claims 2 and 3, **characterized in that** the said supporting roller (6, 106) is substantially in contact with a substantially cylindrical contact surface of the moveable portion (32), the said supporting roller having an active surface of contact that is concave, the concavity of which corresponds substantially to the radius of curvature of the cylindrical contact surface of the moveable portion.

5. Trailer according to one of Claims 2 to 4, **characterized in that** it also comprises at least two lateral rollers (9) rotatably mounted on the said support about rotation axes that are substantially parallel to the vertical longitudinal plane of the trailer, the said lateral rollers being placed on either side of the moveable portion of the sliding tow bar, substantially in contact with the said moveable portion.

6. Trailer according to one of Claims 1 to 5, **characterized in that** the said support comprises a support crosspiece (8, 108) mounted at the front ends of the side members (11; 111a, 111b, 111c, 111d) of the chassis which extend on either side of the sliding tow bar.

7. Trailer according to one of Claims 1 to 6, **characterized in that** it has a loading zone that extends above the sliding tow bar.

8. Road assembly **characterized in that** it comprises
- a trailer as defined in one of Claims 1 to 7,
- a pulling vehicle comprising a chassis on which are mounted at least one front axle and one rear axle, and coupling means mounted on the chassis, in front of the rear axle, capable of interacting with the trailer-coupling means in order to couple the trailer to the pulling vehicle in a position called coupled of the trailer, so that the trailer is articulated on the pulling vehicle at least about a substantially horizontal pitch transverse axis in front of the rear axle of the pulling vehicle, and,
- an axial guidance device comprising guidance means on the pulling vehicle that are capable of interacting, in the coupled position of the trailer, with matching guidance means on the trailer in order to keep the median longitudinal axis of the trailer substantially in the vertical longitudinal plane of the pulling vehicle.

## Patentansprüche

1. Anhänger, der ein Fahrgestell (1, 101) enthält, auf das mindestens zwei Räder (21, 121) und mindestens eine gleitende Deichsel (3) montiert sind, die einen ortsfesten Teil (31), der ortsfest auf das Fahrgestell montiert ist, und einen beweglichen Teil (32) aufweist, der gleitend auf den ortsfesten Teil montiert ist und an seinem freien Ende mit Ankopplungseinrichtungen (4) zum Ankoppeln des Anhängers an ein Zugfahrzeug versehen ist, **dadurch gekennzeichnet, dass** er mindestens ein Stützorgan (6, 106) enthält, das über einen am Fahrgestell (1, 101) befestigten Träger (7, 8, 108; 171, 174) vor dem ortsfesten Teil (31) oberhalb des beweglichen Teils (32) im Wesentlichen in Kontakt mit diesem montiert ist, und gegen das der bewegliche Teil in Auflage kommen kann.

2. Anhänger nach Anspruch 1, **dadurch gekennzeichnet, dass** das Stützorgan den beweglichen Teil der gleitenden Deichsel seitlich bezüglich des ortsfesten Teils halten kann, der fest mit dem Fahrgestell des Anhängers verbunden ist.

3. Anhänger nach Anspruch 1 oder 2, **dadurch gekennzeichnet, dass** das Stützorgan von mindestens einer Stützrolle (6, 106) geformt wird, die auf den Träger (7, 8) gemäß einer Drehachse (61) lotrecht zur senkrechten Längsebene des Anhängers drehbar montiert ist.

4. Anhänger nach den Ansprüchen 2 und 3, **dadurch gekennzeichnet, dass** die Stützrolle (6, 106) im Wesentlichen mit einer im Wesentlichen zylindrischen Kontaktfläche des beweglichen Teils (32) in Kontakt steht, wobei die Stützrolle eine konkave aktive Stützfläche hat, deren Konkavität im Wesentlichen dem Krümmungsradius der zylindrischen Kontaktfläche des beweglichen Teils entspricht.

5. Anhänger nach einem der Ansprüche 2 bis 4, **dadurch gekennzeichnet, dass** er außerdem mindestens zwei seitliche Rollen (9) enthält, die um Drehachsen im Wesentlichen parallel zur senkrechten Längsebene des Anhängers drehbar auf den Träger montiert sind, wobei die seitlichen Rollen zu beiden Seiten des beweglichen Teils der gleitenden Deichsel im Wesentlichen in Kontakt mit dem beweglichen Teil angeordnet sind.

6. Anhänger nach einem der Ansprüche 1 bis 5, **dadurch gekennzeichnet, dass** der Träger einen Tragquerträger (8, 108) enthält, der an die vorderen Enden von Längsträgern (11; 111a, 111b, 111c, 111d) des Fahrgestells montiert ist, die sich zu beiden Seiten der gleitenden Deichsel erstrecken.

7. Anhänger nach einem der Ansprüche 1 bis 6, **dadurch gekennzeichnet, dass** er eine Ladezone aufweist, die sich oberhalb der gleitenden Deichsel erstreckt.

8. Lastzug, **dadurch gekennzeichnet, dass** er enthält
- einen wie in einem der Ansprüche 1 bis 7 definierten Anhänger,
- ein Zugfahrzeug, das ein Fahrgestell, auf das mindestens eine Vorderachse und eine Hinterachse montiert sind, und Ankopplungseinrichtungen enthält, die auf das Fahrgestell vor der Hinterachse montiert sind, die mit den Ankopplungseinrichtungen des Anhängers zusammenwirken können, um den Anhänger an das Zugfahrzeug in einer so genannten angekoppelten Stellung des Anhängers anzukoppeln, damit der Anhänger an das Zugfahrzeug mindestens um eine im Wesentlichen waagrechte Nickachse vor der Hinterachse des Zugfahrzeugs angelenkt wird, und
- eine so genannte axiale Führungsvorrichtung, die Führungseinrichtungen auf dem Zugfahrzeug enthält, welche in der angekoppelten Stellung des Anhängers mit komplementären Führungseinrichtungen auf dem Anhänger zusammenwirken können, um die mittlere Längsachse des Anhängers im Wesentlichen in der senkrechten Längsebene des Zugfahrzeugs zu halten.
